# EUROPÄISCHE PATENTSCHRIFT

(11) **EP 2 271 908 B1**
(45) Veröffentlichungstag und Bekanntmachung des Hinweises auf die Patenterteilung: **30.11.2011**
(21) Anmeldenummer: 09738167.7
(22) Anmeldetag: 29.04.2009
(51) Int. Cl.: G01M 15/12

(54) **VERFAHREN UND VORRICHTUNG ZUM ERKENNEN EINES ZUSTANDES EINER ZU UNTERSUCHENDEN GERÄUSCHERZEUGENDEN MASCHINE**
METHOD AND DEVICE FOR RECOGNIZING A STATE OF A NOISE-GENERATING MACHINE TO BE STUDIED
PROCÉDÉ ET DISPOSITIF POUR RECONNAÎTRE UN ÉTAT D'UNE MACHINE À EXAMINER GÉNÉRANT DU BRUIT

(30) Priorität: 29.04.2008 DE 102008021362
(43) Veröffentlichungstag der Anmeldung: 12.01.2011
(73) Patentinhaber: Siemens Aktiengesellschaft, 80333 München (DE)
(72) Erfinder: LEUTELT, Lutz, 12207 Berlin (DE); HOFER, Joachim, 81739 München (DE)
(86) Internationale Anmeldenummer: PCT/EP2009/055165
(87) Internationale Veröffentlichungsnummer: WO 2009/133123

(56) Entgegenhaltungen:
- EP-A1- 1 564 688
- DE-A1-102004 012 911

## Beschreibung

Die Erfindung betrifft ein Verfahren und eine Vorrichtung zum Erkennen eines Zustandes einer zu untersuchenden geräuscherzeugenden Maschine, die Körper- oder Luftschall abgibt.

Maschinen führen Bewegungen aus, in deren Verlauf Schwingungssignale, insbesondere akustische Schwingungssignale, erzeugt werden. Die von einer Maschine, einer Anlage oder einem elektromechanischen Gerät erzeugten Schwingungssignale erlauben einen Rückschluss auf ihren jeweiligen aktuellen Zustand, der sich beispielsweise aufgrund von Verschleißerscheinungen verändern kann. Beispielsweise erzeugt eine Maschine bzw. ein Gerät nach mehreren Jahren Gebrauch aufgrund von Verschleißerscheinungen andere Schwingungssignale als direkt nach der Herstellung. Neben Maschinen können auch chemische Anlagen Geräuschsignale hervorrufen, beispielsweise aufgrund von Gasblasen in Behältern oder Rohren. Aufgrund der Alterung bzw. des Verschleißes von Anlagen, Maschinen oder Geräten ändern sich die erzeugten Schwingungssignale, insbesondere die akustischen Emissionen. Neben dem Verschleiß hängen die von einer Maschine, einer Anlage oder einem Gerät erzeugten Schwingungssignale, insbesondere die akustischen Geräuschsignale von dem Bautyp ab. Oft weisen Maschinen, Anlagen oder Geräte verschiedene Produkttypen bzw. -modelle innerhalb einer Produktgruppe auf. Beispielsweise kann ein Unternehmen Wasser- oder Heizungspumpen in unterschiedlichen Varianten herstellen deren erzeugtes Geräuschsignal unterschiedlich ist. Innerhalb der Produktgruppen bzw. Produktvarianten weisen zudem die hergestellten Gegenstände Fertigungstoleranzen auf, so dass verschiedene Produkte bzw. Gegenstände aufgrund von Fertigungstoleranzen unterschiedliche Geräuschsignale abgeben können. Neben Alterungs- bzw. Belastungseinflüssen sowie Fertigungstoleranzen beeinflussen auch die Raumeigenschaften der Umgebung in der sich das Gerät bzw. die Anlage befindet, die von dem Gerät bzw. der Anlage abgegebenen Geräuschsignale bzw. akustischen Emissionen.

Bei herkömmlichen Verfahren zum Erkennen eines Zustandes einer zu untersuchenden geräuscherzeugenden Maschine werden an einem hergestellten Prototypen eine Vielzahl von Aufnahmen (recording) vorgenommen, um ein Modell der jeweiligen geräuscherzeugenden Maschine bzw. der geräuscherzeugenden Anlage zu generieren. In einem Trainingsvorgang werden eine Vielzahl von Aufnahmen, insbesondere Tonaufnahmen, durchgeführt, die verschiedene Einflussgrößen berücksichtigen. Beispielsweise werden akustische Geräuschsignale, die durch einen Prototyp abgegeben werden, unter verschiedenen Wetterbedingungen und bei verschiedenen Belastungen zu unterschiedlichen Zeitpunkten aufgezeichnet. Um verschiedene Einflussgrößen zu berücksichtigen, müssen eine Vielzahl von Aufnahmen durchgeführt werden. Die Modellgenerierung anhand des Prototyps ist umso aufwendiger, je mehr verschiedene Varianten des Produktes vorhanden sind. Mit den Trainingsdaten wird ein statistisches Modell oder ein physikalisches Modell des Gegenstandes bzw. Produktes erzeugt, das anschließend zur Klassifikation eines Geräuschsignals herangezogen werden kann, welches von einem hergestellten Produkt nach Inbetriebnahme im laufenden Betrieb abgegeben wird. Aufgrund der Klassifikation des Geräuschsignals kann ein Betriebszustand eines Produktes überwacht werden, so dass auftretende Fehlerzustände und somit die Notwendigkeit von Wartungsarbeiten erkannt werden.

Ein solches Verfahren wird zum Beispiel offenbart in EP 1564688.

Ein Nachteil der herkömmlichen Vorgehensweise besteht darin, dass sich die von einem hergestellten Produkt abgegebenen Geräuschsignale bzw. akustischen Emissionen auch in einem normalen bzw. fehlerfreien Zustand von den Geräuschsignalen des Prototyps unterscheiden bzw. dävon abweichen. Ein Grund dafür kann sein, dass das hergestellte Produkt, bei dem es sich beispielsweise um eine Maschine, ein Gerät oder eine Anlage handeln kann, sich in einer anderen Umgebung befindet als der Prototyp bei Aufzeichnung der Trainingsdaten. Es werden somit dem Nutzsignal, das heißt den akustischen Emissionen des zu untersuchenden Gegenstandes, Umgebungsgeräusche als Störsignal überlagert. Beispielsweise kann die Aufzeichnung der Trainingsdaten an einem Prototypen in einem Raum mit wenig Hall erfolgen während sich der zu untersuchende Gegenstand, etwa eine Fertigungsmaschine, in einer Werkshalle befindet, die akustische Signale stark reflektiert. Weiterhin kann das zu untersuchende Produkt bzw. die zu untersuchende Anlage aufgrund von Fertigungstoleranzen oder aufgrund einer abweichenden Konfiguration ein anderes akustisches Emissionsspektrum aufweisen als der Prototyp.

Es ist daher eine Aufgabe der vorliegenden Erfindung ein Verfahren und eine Vorrichtung zu schaffen, bei denen ein Zustand eines zu untersuchenden geräuscherzeugenden Gegenstandes mit geringem Aufwand sicher erkannt wird.

Diese Aufgabe wird erfindungsgemäß durch ein Verfahren mit den im Patentanspruch 1 angegebenen Merkmalen gelöst.

Die Erfindung schafft ein Verfahren zum Erkennen eines Zustandes eines zu untersuchenden geräuscherzeugenden Gegenstandes, wobei ein für mindestens einen Referenzgegenstand generiertes statistisches Grundklassifikationsmodell von akustischen Merkmalen anhand von akustischen Merkmalen eines von dem z untersuchenden Gegenstand erzeugten Geräusches automatisch individuell adaptiert wird und auf Basis des adaptierten statistischen Klassifikationsmodells eine Klassifikation des Zustandes des zu untersuchenden geräuscherzeugenden Gegenstandes erfolgt.

Bei dem geräuscherzeugenden Gegenstand kann es sich um eine beliebige Maschine bzw. Gerät oder um eine Anlage, beispielsweise um eine chemische Anlage handeln.

Bei einer Ausführungsform des erfindungsgemäßen Verfahrens wird der Referenzgegenstand durch einen Prototypen des zu untersuchenden Gegenstandes gebildet.

Bei einer Ausführungsform des erfindungsgemäßen Verfahrens weist der zu untersuchende geräuscherzeugende Gegenstand mindestens ein motorgetriebenes geräuscherzeugendes Modul auf.

Bei einer Ausführungsform des erfindungsgemäßen Verfahrens erfolgt die Adaption des statistischen Klassifikationsmodells bei der Inbetriebnahme des zu untersuchenden Gegenstandes, in regelmäßigen Wartungs-Zeitabständen oder bei Änderung eines akustischen Umfeldes des zu untersuchenden Gegenstandes.

Bei einer Ausführungsform des erfindungsgemäßen Verfahrens wird das statistische Grundklassifikationsmodell von akustischen Merkmalen auf Basis einer Vielzahl von akustischen Tonaufnahmen generiert, die an dem Referenzgegenstand unter verschiedenen Bedingungen oder zu unterschiedlichen Zeitpunkten vorgenommen werden.

Bei einer Ausführungsform des erfindungsgemäßen Verfahrens wird das generierte statistische Grund-Klassifikationsmodell in einem Speicher gespeichert.

Bei einer Ausführungsform des erfindungsgemäßen Verfahrens wird das gespeicherte Grund-Klassifikationsmodell auf Basis einer Anzahl von akustischen Tonaufnahmen, die an dem zu untersuchenden Geräuscherzeugenden Gegenstand vorgenommen werden, automatisch adaptiert und als adaptiertes statistisches Klassifikationsmodell zwischengespeichert.

Bei einer Ausführungsform des erfindungsgemäßen Verfahrens werden die akustischen Tonaufnahmen mittels akustischer Tonaufnehmer vorgenommen, die Luftschall oder Körperschall erfassen.

Bei einer Ausführungsform des erfindungsgemäßen Verfahrens wird das statistische Klassifikationsmodell für den gesamten geräuscherzeugenden Gegenstand oder für Module des geräuscherzeugenden Gegenstandes adaptiert.

Bei einer Ausführungsform des erfindungsgemäßen Verfahrens sind die akustischen Tonaufnehmer an dem zu untersuchenden geräuscherzeugenden Gegenstand angebracht oder werden an dem zu untersuchenden geräuscherzeugenden Gegenstand vorbeigeführt.

Bei einer Ausführungsform des erfindungsgemäßen Verfahrens wird für verschieden einstellbare Positionen des an dem zu untersuchenden Gegenstand vorbeigeführten akustischen Tonaufnehmers jeweils ein adaptiertes statistisches Klassifikationsmodell berechnet.

Bei einer Ausführungsform des erfindungsgemäßen Verfahrens wird für die einstellbaren Positionen des vorbeigeführten akustischen Tonaufnehmers jeweils ein adaptiertes statistisches Klassifikationsmodell berechnet.

Bei einer Ausführungsform des erfindungsgemäßen Verfahrens entsprechen die einstellbaren Positionen des vorbeigeführten akustischen Tonaufnehmers der räumlicher Anordnung verschiedener Module des zu untersuchenden geräuscherzeugenden Gegenstandes.

Die Erfindung schafft ferner eine Vorrichtung zum Erkennen eines Zustandes eines zu untersuchenden geräuscherzeugenden Gegenstandes, wobei ein für mindestens einen Referenzgegenstand generiertes statistisches Grund-Klassifikationsmodell von akustischen Merkmalen anhand von akustischen Merkmalen eines von dem zu untersuchenden Gegenstand erzeugten Geräusches durch eine Datenverarbeitungseinheit automatisch individuell adaptiert wird, wobei die Datenverarbeitungseinheit auf Basis des adaptierten statistischen Klassifikationsmodells den Zustand des zu untersuchenden geräuscherzeugenden Gegenstandes klassifiziert.

Bei einer Ausführungsform der erfindungsgemäßen Vorrichtung weist diese mindestens einen akustischen Tonaufnehmer zur Erfassung eines von dem zu untersuchenden geräuscherzeugenden Gegenstand erzeugten Körper- oder Luftschalls auf.

Im Weiteren werden Ausführungsformen des erfindungsgemäßen Verfahrens und der erfindungsgemäßen Vorrichtung zum Erkennen eines Zustandes eines zu untersuchenden geräuscherzeugenden Gegenstandes unter Bezugnahme auf die beigefügten Figuren zur Erläuterung erfindungswesentlicher Merkmale beschrieben.

Es zeigen:
- Figur 1: Ein Ablaufdiagramm zur Darstellung einer möglichen Ausführungsform des erfindungsgemäßen Verfahrens;
- Figur 2: Ein weiteres Diagramm zur Darstellung der Vorgehensweise bei dem erfindungsgemäßen Verfahren;
- Figur 3: Ein Blockschaltbild einer möglichen Ausführungsform der erfindungsgemäßen Vorrichtung zum Erkennen eines Zustandes eines zu untersuchenden geräuscherzeugenden Gegenstandes;
- Figuren 4A, 4B: Weitere Ausführungsformen der erfindungsgemäßen Vorrichtung zum Erkennen eines Zustandes eines zu untersuchenden geräuscherzeugenden Gegenstandes.

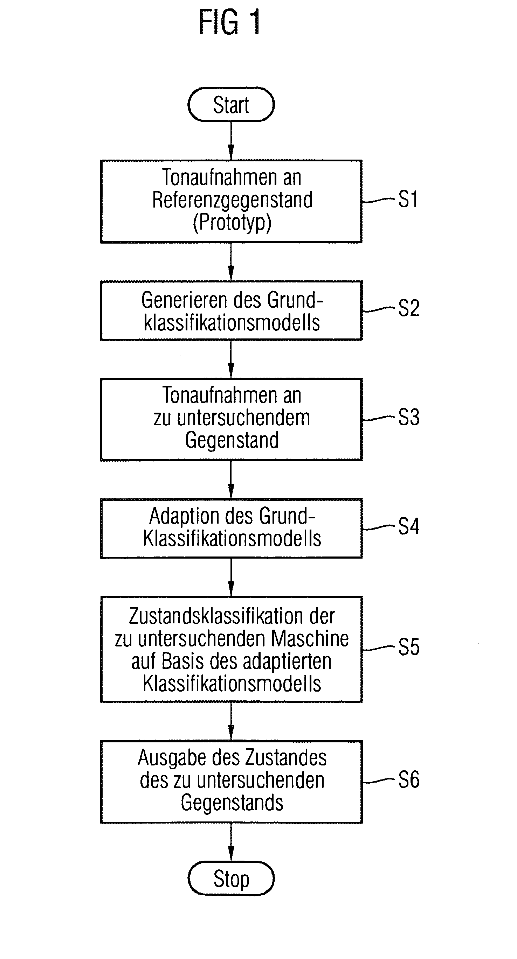

Wie man aus Figur 1 erkennen kann, werden bei dem erfindungsgemäßen Verfahren in einem Schritt S1 zunächst mittels Tonaufnehmern bzw. Sensoren Tonaufnahmen an einem Referenzgegenstand des zu untersuchenden geräuscherzeugenden Gegenstandes vorgenommen. Bei dem Referenzgegenstand kann es sich um einen Prototypen des Gegenstandes handeln. Der Gegenstand ist beispielsweise eine Maschine oder ein Gerät welches im laufenden Betrieb Geräusche erzeugt. Das Geräuschsignal kann ein Luftschallsignal oder ein Körperschallsignal sein. Bei dem zu untersuchenden Gegenstand kann es sich auch um eine Anlage, beispielsweise eine chemische Anlage, handeln, die während eines chemischen Fertigungsprozesses Geräusche z.B. innerhalb von Tankeinrichtungen oder Röhren hervorruft. Das Geräusch bzw. Schwingungssignal wird mit Tonaufnehmern aufgenommen bzw. aufgezeichnet. Diese Tonaufnehmer weisen Mikrofone oder sonstige Schwingungssensoren, insbesondere Beschleunigungssensoren, auf. Die Tonaufnehmer bzw. Schwingungssensoren wandeln das Geräusch bzw. Schwingungssignal in ein elektrisches Signal um. Die Tonaufnahmen an dem Referenzgegenstand bzw. an dem Prototypen werden vorzugsweise zu verschiedenen Zeitpunkten unter verschiedenen Umgebungsbedingungen vorgenommen.

Anschließend werden im Schritt S2 auf Grundlage der Tonaufnahmen Merkmale m des Tonsignals bzw. Schwingungssignals extrahiert. Mögliche Merkmale sind beispielsweise die Amplitude bzw. die Lautstärke des Ton- bzw. Geräuschsignals. Weiter mögliche Merkmale sind spektrale Merkmale des Geräuschsignals sowie deren zeitliche Modulationen. Ferner können beispielsweise Merkmale des Modulations-Spektrum eingesetzt werden. Für die verschiedenen, an dem Referenzgegenstand vorgenommenen Aufnahmen (recording) kann jeweils ein Merkmalsvektor M ermittelt werden. Typischerweise werden 10-500 Merkmale m des Geräuschsignals betrachtet. Die Anzahl N von Aufnahmen an dem Referenzgegenstand wird in Abhängigkeit von dem betrachteten Gegenstand eingestellt. Üblicherweise werden N>100 Tonaufnahmen des Referenzgegenstandes ausgewertet. Anhand der Merkmalsvektoren M, die jeweils beispielsweise 10-500 Merkmale m einer Aufnahme umfassen, wird im Schritt S2 mittels eines Algorithmus ein Grund-Klassifikationsmodell generiert. Die Modellgenerierung kann beispielsweise mittels Expectation Maximization (EM) oder GMM, mittels einer Support Vector Machine (SVM), mittels Self Organizing Maps (SOM) oder mittels neuronaler Netze erfolgen.

In einem weiteren Schritt S3 werden akustische Luft- oder Körperschallsignale mittels Tonaufnehmern an den zu untersuchenden Gegenstand aufgezeichnet bzw. aufgenommen. Das im Schritt S2 erzeugte statistische Grund-Klassifikationsmodell von akustischen Merkmalen m wird im Schritt S3 anhand von akustischen Merkmalen m, des im Schritt S3 aufgenommen Geräuschsignals, automatisch adaptiert. Bei einer möglichen Ausführungsform weist das Grund-Klassifikationsmodell für jedes Merkmal m mindestens einen statistischen Parameter P auf. Dieses statistischen Parameter P umfassen beispielsweise einen Mittelwert µ oder eine Varianz σ². Den Merkmalen m kann eine gaußsche Verteilung zugrunde gelegt werden, wobei für jedes Merkmal m anhand der Tonaufnahmen des Referenzgegenstandes ein Mittelwert µ und eine Varianz σ² der Verteilung angegeben wird. Beispielsweise werden im Schritt S1 Tonaufnahmen an verschiedenen Referenzgegenständen bzw. Prototypen gemacht und ein Mittelwert µ bezüglich jedes Merkmals m errechnet. Handelt es sich bei dem Merkmal m z.B. um die Lautstärke des erfassten Tonsignals wird der Mittelwert µ der Lautstärke und eine Varianz σ² der Lautstärke als statistische Parameter P für das Merkmal der Lautstärke in dem Grund-Klassifikationsmodell angegeben.

Anhand der an den zu untersuchenden Gegenstand in Schritt S3 vorgenommenen Tonaufnahme erfolgt dann eine Adaption des Grund-Klassifikationsmodells in Schritt S4, indem die statistischen Parameter P für jedes Merkmal m des Grund-Klassifikationsmodells entsprechend angepasst werden. Die Tonaufnahme an dem zu untersuchenden Gegenstand in Schritt S3 und die Adaption des Grund-Klassifikationsmodells in Schritt S4 kann bei einer möglichen Ausführungsform des erfindungsgemäßen Verfahrens bei der Inbetriebnahme des zu untersuchenden Gegenstandes erfolgen. Bei einer alternativen Ausführungsform erfolgt die Tonaufnahme in Schritt S3 und die Adaption in Schritt S4 in regelmäßigen Wartungs-Zeitabständen beispielsweise einmal pro Tag. Bei einer weiteren möglichen Ausführungsform erfolgt die Tonaufnahme in Schritt S3 und die Adaption des Grund-Klassifikationsmodells in Schritt S4 bei einer Änderung eines akustischen Umfeldes des zu untersuchenden Gegenstandes, beispielsweise wenn der Gegenstand in einen anderen Raum gebracht wird. Weiterhin kann die Tonaufnahme und die Adaption bei Bedarf erfolgen, etwa nach Durchführung einer Wartungsarbeit an dem zu untersuchenden Gegenstand bzw. wenn ein Nutzer eine Untersuchung für erforderlich hält.

In einem weiteren Schritt S5 wird auf Basis des adaptierten statistischen Klassifikationsmodells eine Klassifikation des Zustandes des zu untersuchenden geräuscherzeugenden Gegenstandes durchgeführt. Diese Zustandsklassifikation kann anhand aller oder einiger der Merkmale m des adaptierten Grund-Klassifikationsmodells erfolgen. Beispielsweise kann ein zu untersuchender geräuscherzeugender Gegenstand als fehlerhaft klassifiziert werden, wenn das Merkmal Lautstärke einen einstellbaren Schwellenwert überschreitet.

In einem weiteren Schritt S6 wird der klassifizierte Zustand des zu untersuchenden Gegenstandes ausgegeben und gegebenenfalls werden dann notwendige Maßnahmen eingeleitet.

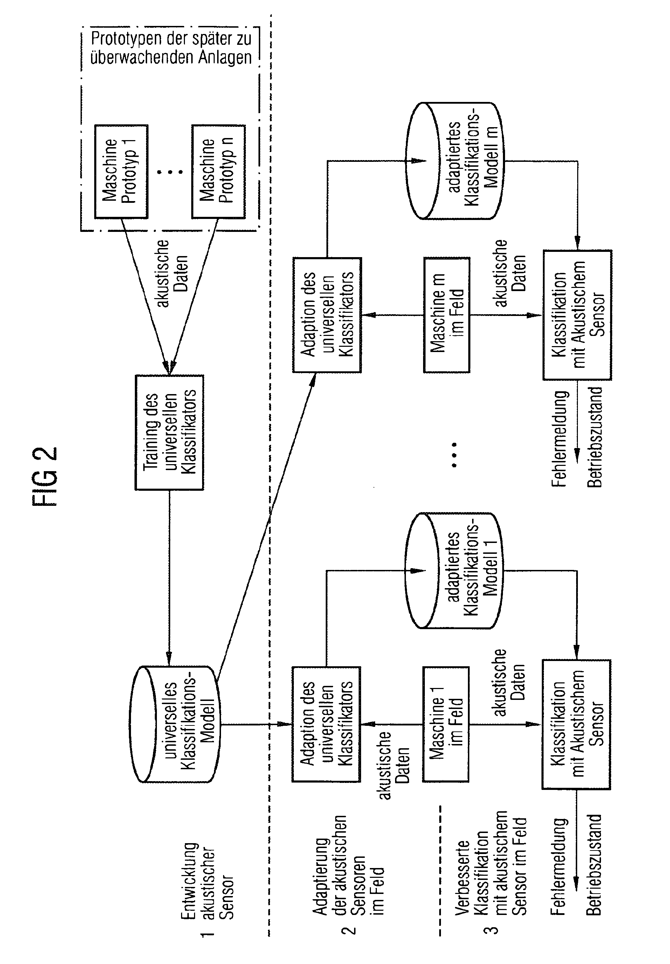

Figur 2 zeigt ein Diagramm zur Verdeutlichung einer möglichen Ausführungsform des erfindungsgemäßen Verfahrens zum Erkennen eines Zustandes eines zu untersuchenden geräuscherzeugenden Gegenstandes. Bei dem in Figur 2 dargestellten Gegenstandes handelt es sich um eine Maschine, die akustische Daten liefert. Zunächst werden an n Prototypen der Maschine Tonaufnahmen (recording) durchgeführt und ein universelles statistisches Grund-Klassifikationsmodell aufgrund der Trainingsdaten generiert. Dieses universelle Grund-Klassifikationsmodell wird in einem Speicher bzw. einer Datenbank abgelegt. Dieses allgemeine Klassifikationsmodell weist vorzugsweise die wesentlichen Eigenschaften eines Normalzustandes und/oder möglicher Fehler oder Wartungszustände des Gegenstandes bzw. der Maschine auf. Anschließend erfolgt eine Adaption des universellen Grund-Klassifikationsmodells für die verschiedenen hergestellten Maschinen. Bei dem in Figur 2 dargestellten Beispiel werden verschiedene Maschinen im Feld untersucht. Jede Maschine liefert ein akustisches Geräuschsignal bzw. akustische Daten, die zur individuellen Adaption des gespeicherten universellen Klassifikationsmodells genutzt werden.

Auf diese Weise entsteht für jede Maschine ein zugehöriges adaptives Klassifikationsmodell, das in einem Speicher zwischengespeichert werden kann. Mittels eines Klassifikationsalgorithmus erfolgt anschließend auf Basis des adaptierten statistischen Klassifikationsmodells eine Klassifikation des Zustandes der jeweiligen zu untersuchenden geräuscherzeugenden Maschine, um einen Betriebszustand zu erfassen bzw. eine Fehlermeldung zu generieren. Wie man aus Figur 2 erkennen kann, wird der erhebliche Aufwand zur Generierung eines Klassifikationsmodells anhand von mindestens einem Prototypen nur einmalig betrieben. Die anschließende Adaption des gebildeten statistischen Grund-Klassifikationsmodells kann mit einem relativ geringen Rechenaufwand in kurzer Zeit bzw. in Echtzeit erfolgen. Während die Generierung des statistischen Grund-Klassifikationsmodells eine Vielzahl von erfassten Tonaufnahmen und eine große Rechnerleistung erfordern, kann die Adaption des gespeicherten Grund-Klassifikationsmodells für den jeweiligen zu untersuchenden Gegenstand bei veränderten Umgebungsbedingungen im Feld mit geringem Rechenaufwand automatisiert erfolgen, ohne dass ein entsprechender Experte bzw. Fachmann vor Ort sein muss. Für die Adaption des statistischen Grund-Klassifikationsmodells sind zudem vergleichsweise wenige zusätzliche akustische Daten bzw. Tonaufnahmen an der jeweiligen Maschine bzw. an dem jeweiligen Gegenstand erforderlich. Das erfindungsgemäße Verfahren sieht einen zweistufigen Ansatz vor, nämlich zunächst die Bildung eines universellen statistischen Grund-Klassifikationsmodells und eine anschließende Adaption dieses Klassifikationsmodells für den jeweiligen zu untersuchenden Gegenstand im Feld.

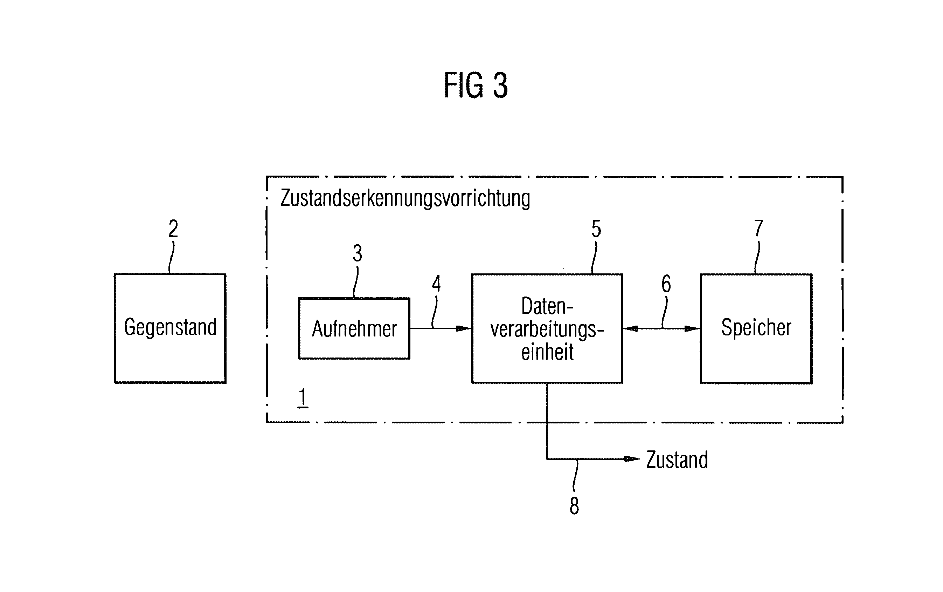

Figur 3 zeigt ein Ausführungsbeispiel für eine erfindungsgemäße Vorrichtung 1 zum Erkennen eines Zustandes eines zu untersuchenden geräuscherzeugenden Gegenstandes. Bei dem zu untersuchenden Gegenstand 2 handelt es sich beispielsweise um ein Gerät oder um eine Maschine. Die Vorrichtung 1 weist mindestens einen Aufnehmer 3 zur Erfassung eines von dem zu untersuchenden geräuscherzeugenden Gegenstand 2 erzeugten Körper- oder Luftschallsignals auf. Der Aufnehmer 3 erfasst das von dem Gegenstand 2 abgegebene Schwingungssignal. Bei dem Aufnehmer 3 handelt es sich beispielsweise um einen akustischen Tonaufnehmer zur Erfassung eines Luftschallsignals, das heißt um ein Mikrofon. Bei einer alternativen Ausführungsform ist der Aufnehmer 3 direkt an dem Gegenstand 2 angebracht und erfasst Körperschall bzw. Vibrationen des Gegenstandes 2. Bei einem Aufnehmer 3 kann es sich beispielsweise um einen Beschleunigungssensor handeln. Der Aufnehmer 3 wandelt das Schall- bzw. Vibrationssignal in ein elektrisches Signal um und gibt dieses über eine Leitung 4 an eine Datenverarbeitungseinheit 5 ab. Die Datenverarbeitungseinheit 5 ist beispielsweise ein Mikroprozessor in dem ein Programm ausgeführt wird. Die Datenverarbeitungseinheit 5 ist über Leitungen 6 mit einem Speicher 7 verbunden, in dem das generierte Grund-Klassifikationsmodell abgelegt ist. Bei einer alternativen Ausführungsform erhält die Datenverarbeitungseinheit 5 das Grund-Klassifikationsmodell über eine Schnittstelle. Die Datenverarbeitungseinheit 5 adaptiert das Grund-Klassifikationsmodell von akustischen Merkmalen anhand von akustischen Merkmalen m eines von dem zu untersuchenden Gegenstand 2 erzeugten Geräusches. Auf Basis des adaptierten statistischen Klassifikationsmodells wird mittels eines Klassifikationsalgorithmus der Zustand des zu untersuchenden geräuscherzeugenden Gegenstandes 2 durch die Datenverarbeitungseinheit 5 klassifiziert. Dieser Zustand wird über Ausgabeleitungen 8 gemeldet. Bei einer möglichen Ausführungsform sind der Aufnehmer 3 und die Datenverarbeitungseinheit 5 in einem Bauelement integriert. Dieses Bauelement kann an einen beliebigen Gegenstand 2 angebracht werden.

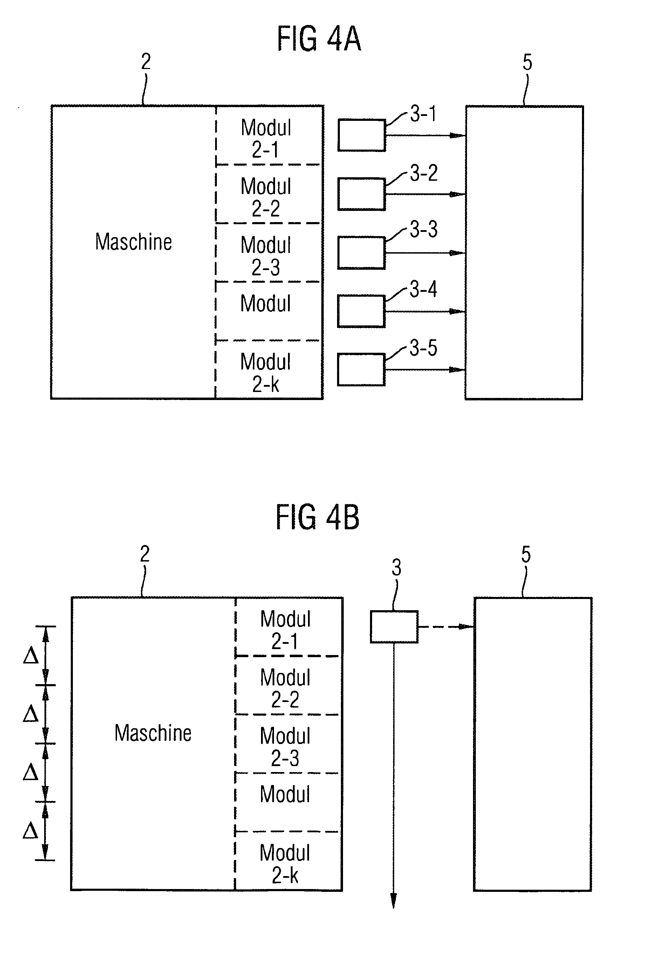

Die Figuren 4A, 4B zeigen weitere Ausführungsvarianten der erfindungsgemäßen Vorrichtung 1 zum Erkennen eines Zustandes eines zu untersuchenden geräuscherzeugenden Gegenstandes 2. Bei dem Ausführungsbeispiel ist der geräuscherzeugende Gegenstand 2 eine Maschine bzw. ein Gerät, das eine Vielzahl von gleichartigen Maschinenmodulen 2-1, 2-2 bis 2-k aufweist. Ein Beispiel für eine derartige Maschine 2 ist eine Briefsortieranlage, die eine Vielzahl von Segmenten bzw. Sortierfächern gleicher Bauart aufweist. Die verschiedenen Segmente bzw. Module der Briefsortieranlage 2 sind unter Umständen einer unterschiedlichen Belastung ausgesetzt und weisen daher einen unterschiedlichen Verschleiß auf. Weiterhin können sich derartige Briefsortieranlagen in unterschiedlichen akustischen Umgebungen befinden. Bei dem in Figur 4A dargestellten Ausführungsbeispiel wird an jedem Modul der Maschine 2 ein zugehöriger Aufnehmer 3 angebracht, der zur Überwachung des Betriebszustandes des jeweiligen Moduls anhand des von dem Modul abgegebenen Geräuschsignals vorgesehen ist. Die Datenverarbeitungseinheit 5 führt anschließend für jedes Modul 2-i der Maschine 2 die Schritts S3-S6 des in Figur 1 dargestellten Ablaufes durch.

Bei der in Figur 4B dargestellten alternativen Ausführungsform wird nicht für jedes Modul 2-i der Maschine 2 ein Aufnehmer 3 vorgesehen, sondern es wird ein Aufnehmer, beispielsweise ein Tonaufnehmer, linear an der Maschine 2 vorbeigeführt und gibt das erfasste Geräuschsignal beispielsweise über eine Luftschnittstelle an die Datenverarbeitungseinheit 5 ab. Da die räumliche Anordnung der verschiedenen Module 2-i innerhalb des zu untersuchenden Gegenstandes 2 bekannt ist, kann für die verschiedenen Positionen des an dem zu untersuchenden Gegenstand 2 vorbeigeführten akustischen Tonaufnehmers 3 jeweils durch die Datenverarbeitungseinheit 5 ein adaptiertes statistisches Klassifikationsmodell berechnet werden. Beispielsweise ist bei einer Briefsortieranlage der Abstand Δ zwischen den verschiedenen Segmenten bzw. Sortierfächern bekannt. Die verschiedenen einstellbaren Positionen des vorbeigeführten akustischen Tonaufnehmers 3 entsprechen der räumlichen Anordnung der verschiedenen Module 2-i der zu untersuchenden geräuscherzeugenden Briefsortieranlage 2.

Bei einer möglichen Ausführungsform wird ein adaptiertes Klassifikationsmodell für die gesamte Briefsortieranlage 2 im Feld aus einem universellen Klassifikationsmodell eines Prototypen erstellt. Bei einer alternativen Ausführungsform wird für jedes Fach bzw. für jedes Segment 2-i der Briefsortieranlage 2 ein adaptiertes Klassifikationsmodell erzeugt.

Die akustische Überwachung der verschiedenen Module 2-i kann durch Vibrationssensoren oder durch Mikrofone erfolgen. Die Vibrationssensoren werden direkt an dem Gehäuse angebracht und erfassen einen Körperschall. Die Mikrofone können bei einer möglichen Ausführungsform eine spezielle Richtcharakteristik aufweisen. Der Abstand der Mikrofone bzw. der Aufnehmer 3 zu dem zu untersuchenden Gegenstand 2 kann zwischen einigen Millimetern und mehreren Metern variieren. Bei einer möglichen Ausführungsform erfolgt die akustische Überwachung mittels nur eines Schallaufnehmers 3 der zu Lokalisierung eines Fehlers an der Briefsortierungsanlage 2 automatisch oder manuell vorbeigeführt wird. Bei einer alternativen Ausführungsform sind mehrere Schallaufnehmer 3 vorgesehen, die jeweils einen Teil der Anlage bzw. des zu untersuchenden Gegenstandes 2 beobachten.

Wird ein adaptiertes Klassifikationsmodell für die gesamte Anlage bzw. für die gesamte Briefsortieranlage 2 erstellt, kann die Adaption durchgeführt werden, indem der Schallaufnehmer 3 an verschiedene charakteristische Positionen der Anlage gefahren wird und dort akustische Daten aufnimmt. Die aufgenommenen akustischen Daten werden zur Erzeugung des adaptierten statistischen Klassifikationsmodells verwendet.

Wird für jedes Fach bzw. jedes Segment der Briefsortieranlage 2 eine Adaption durchgeführt, kann ein Schallaufnehmer 3 Daten aufnehmen und für sich ein separates adaptiertes Modell berechnen. Dieses adaptierte Modell kann in dem Sensor bzw. Schallaufnehmer vor Ort oder alternativ zentral gespeichert werden. Alternativ kann der Schallaufnehmer 3 an verschiedenen Positionen der Briefsorteranlage 2 gefahren werden und dort die akustischen Daten vor Ort aufnehmen. Weiterhin kann der Schallaufnehmer 3 für die jeweilige Position des Schallaufnehmers 3 ein adaptiertes Klassifikationsmodell berechnen oder aus einer Anzahl von vergleichbaren Positionen beispielsweise für Maschinensegmente bzw. Module gleicher Bauart, adaptive Klassifikationsmodelle berechnen.

Wenn eine Adaption des Klassifizierungsmodells bei einer möglichen Ausführungsform einmalig bei der Inbetriebnahme der Briefsortieranlage 2 erfolgt ist, wird der oder die Aufnehmer 3 in einen Betriebszustand "Klassifikation" gebracht und eine Fehlererkennung aktiviert. Die Adaption kann bei Bedarf jederzeit wiederholt werden, zum Beispiel wenn Bauteile bzw. ganze Module ausgetauscht werden oder wenn sich die Raumakustik verändert. Hierbei kann anstatt des Grund-Klassifikationsmodells bzw. Universalmodells ein bereits bei der Inbetriebnahme der Briefsortieranlage 2 adaptiertes Modell herangezogen werden, je nachdem ob sich die akustische Raumsituation verändert hat oder nicht. Das erfindungsgemäße Verfahren zum Erkennen eines Zustandes eines zu untersuchenden geräuscherzeugenden Gegenstandes 2 eignet sich für beliebige Gegenstände, wie beispielsweise zur Überwachung von Motoren, Pumpen, Automatisierungsanlagen oder chemischen Anlagen.

## Patentansprüche

1. Verfahren zum Erkennen eines Zustandes eines zu untersuchenden garäuscherzeugenden Gegenstandes (2), wobei ein für mindestens eines Referenzgegenstand generiertes statistisches Grund-Klassifikationsmodell von akustischen Merkmalen anhand von akustischen Merkmalen (m) eines von dem zu untersuchenden Gegenstand (2) erzeugten Geräusches automatisch adaptiert wird, **dadurch gekennzeichnet dass** das Grund-Klassifikationsmodell individuell adaptiert wird und auf Basis des individuell adaptierten statistischen Klassifikationsmodells eine Klassifikation des Zustandes des zu untersuchenden geräuscherzeugenden Gegenstandes (2) erfolgt.

2. Verfahren nach Anspruch 1,
wobei der Referenzgegenstand durch einen Prototypen des zu untersuchenden Gegenstandes (2) gebildet wird.

3. Verfahren nach Anspruch 1,
wobei der zu untersuchende geräuscherzeugende Gegenstand (2) mindestens ein geräuscherzeugendes Modul aufweist.

4. Verfahren nach Anspruch 1,
wobei die Adaption des statistischen Klassifikationsmodells bei der Inbetriebnahme des zu untersuchenden Gegenstandes (2), in regelmäßigen Wartungszeitabständen oder bei Änderung eines akustischen Umfeldes des zu untersuchenden Gegenstandes (2) durchgeführt wird.

5. Verfahren nach Anspruch 1,
wobei das statistische Grund-Klassifikationsmodell von akustischen Merkmalen auf Basis einer Vielzahl von akustischen Tonaufnahmen, die an dem Referenzgegenstand unter verschiedenen Bedingungen oder zu unterschiedlichen Zeitpunkten vorgenommen werden, generiert wird.

6. Verfahren nach Anspruch 5,
wobei das generierte statistische Grund-Klassifikationsmodell in einem Speicher (7) gespeichert wird.

7. Verfahren nach Anspruch 6,
wobei das gespeicherte Grund-Klassifikationsmodell auf Basis einer Anzahl von akustischen Tonaufnahmen, die an dem zu untersuchenden geräuscherzeugenden Gegenstand (2) vorgenommen werden, automatisch adaptiert und als adaptiertes statistisches Klassifikationsmodell zwischengespeichert wird.

8. Verfahren nach Anspruch 5 oder 7,
wobei die akustischen Tonaufnahmen mittels akustischer Tonaufnehmer (3) vorgenommen werden, die Luftschall oder Körperschall erfassen.

9. Verfahren nach Anspruch 1,
wobei das statistische Klassifikationsmodell für den gesamten geräuscherzeugenden Gegenstand (2) oder für Module des geräuscherzeugenden Gegenstandes adaptiert wird.

10. Verfahren nach Anspruch 8,
wobei die akustischen Tonaufnehmer an dem zu untersuchenden geräuscherzeugenden Gegenstand (2) angebracht sind oder an dem zu untersuchenden geräuscherzeugenden Gegenstand vorbeigeführt werden.

11. Verfahren nach Anspruch 10,
wobei für verschiedene einstellbare Positionen des an dem zu untersuchenden Gegenstand (2) vorbeigeführten akustischen Tonaufnehmers jeweils ein adaptiertes statistisches Klassifikationsmodell berechnet wird.

12. Verfahren nach Anspruch 11,
wobei die einstellbaren Positionen des vorbeigeführten akustischen Tonaufnehmers (3) der räumlichen Anordnung verschiedener Module des zu untersuchenden geräuscherzeugenden Gegenstandes (2) entsprechen.

13. Vorrichtung zum Erkennen eines Zustandes eines zu untersuchenden geräuscherzeugenden Gegenstandes, umfassend eine Datenverarbeitungseinheit, die so ausgebildet ist, dass sie automatisch ein für mindestens einen Referenzgegenstand generiertes statistisches Grundklassifikationsmodell von akustischen Merkmalen anhand von akustischen Merkmalen (m) eines von dem zu untersuchenden Gegenstand (2) erzeugten Geräusches adaptiert, wobei die Datenverarbeitungseinheit (5) ausgebildet ist auf Basis des adaptierten statistischen Klassifikationsmodells den Zustand des zu untersuchenden geräuscherzeugenden Gegenstandes (2) zu klassifizieren, wobei die Vorrichtung **dadurch gekennzeichnet ist, dass** die Datenverarbeitungseinheit zum individuellen Adaptieren des statistischen Grundklassifikationsmodells ausgebildet ist, und dass die Datenverarbeitungseinheit ausgebildet ist auf Basis des individuell adaptierten statistischen Klassifikationsmodells den Zustand des zu untersuchenden geräuscherzeugenden Gegenstandes (2) zu klassifizieren.

14. Vorrichtung nach Anspruch 13 mit mindestens einem akustischen Tonaufnehmer (3) zur Erfassung eines von dem zu untersuchenden geräuscherzeugenden Gegenstandes (2) erzeugten Körper- oder Luftschalls.

15. Computerprogramm mit Programmbefehlen zur Durchführung des Verfahrens nach Anspruch 1 - 12.

16. Datenträger zum Speichern des Computerprogramms nach Anspruch 15.

## Claims

1. Method for recognising a state of a noise-generating object to be investigated (2), wherein a statistical basic classification model of acoustic features generated for at least one reference object is automatically adapted based on acoustic features (m) of a noise generated by the object to be investigated (2), **characterised in that** the basic classification model is adapted individually and the state of the noise-generating object to be investigated (2) is classified on the basis of the individually adapted statistical classification model.

2. Method according to claim 1, wherein the reference object is formed by a prototype of the object to be investigated (2).

3. Method according to claim 1, wherein the noise-generating object to be investigated (2) features at least one noise-generating module.

4. Method according to claim 1, wherein the statistical classification model is adapted during commissioning of the object to be investigated (2), at regular maintenance intervals or when there is a change in an acoustic environment of the object to be investigated (2).

5. Method according to claim 1, wherein the statistical basic classification model of acoustic features is generated on the basis of a plurality of acoustic sound recordings, which are made at the reference object in different conditions or at different times.

6. Method according to claim 5, wherein the generated statistical basic classification model is stored in a memory (7).

7. Method according to claim 6, wherein the stored basic classification model is automatically adapted on the basis of a number of acoustic sound recordings, which are made at the noise-generating object to be investigated (2), and buffered as an adapted statistical classification model.

8. Method according to claim 5 or 7, wherein the acoustic sound recordings are made by means of acoustic sound pickups (3), which capture air-borne or structure-borne sound.

9. Method according to claim 1, wherein the statistical classification model is adapted for the entire noise-generating object (2) or for modules of the noise-generating object.

10. Method according to claim 8, wherein the acoustic sound pickups are attached to the noise-generating object to be investigated (2) or are passed by the noise-generating object to be investigated.

11. Method according to claim 10, wherein an adapted statistical classification model is calculated for different possible positions of the acoustic sound pickup passing the object to be investigated (2).

12. Method according to claim 11, wherein the possible positions of the passing acoustic sound pickup (3) correspond to the spatial arrangement of different modules of the noise-generating object to be investigated (2).

13. Device for recognising a state of a noise-generating object to be investigated, comprising a data processing unit (5), which is configured so that it automatically adapts a statistical basic classification model of acoustic features generated for at least one reference object based on acoustic features (m) of a noise generated by the object to be investigated (2), wherein the data processing unit (5) is configured to classify the state of the noise-generating object to be investigated (2) on the basis of the adapted statistical classification model, wherein the device is **characterised in that** the data processing unit is configured to individually adapt the statistical basic classification model and the data processing unit is configured to classify the state of the noise-generating object to be investigated (2) on the basis of the individually adapted statistical classification model.

14. Device according to claim 13, having at least one acoustic sound pickup (3) for capturing a structure-borne or air-borne sound generated by the noise-generating object to be investigated (2).

15. Computer program having program commands for carrying out the method according to claim 1 - 12.

16. Data medium for storing the computer program according to claim 15.

## Revendications

1. Procédé pour reconnaître un état d'un objet (2) à examiner qui génère du bruit, un modèle statistique de classification de base de caractéristiques acoustiques généré pour au moins un objet de référence étant adapté automatiquement sur la base de caractéristiques acoustiques (m) d'un bruit généré par l'objet (2) à examiner, **caractérisé en ce que** le modèle de classification de base est adapté individuellement et une classification de l'état de l'objet (2) à examiner qui génère du bruit s'effectue sur la base du modèle statistique de classification adapté individuellement.

2. Procédé selon la revendication 1, l'objet de référence étant constitué par un prototype de l'objet (2) à examiner.

3. Procédé selon la revendication 1, l'objet (2) à examiner qui génère du bruit comportant au moins un module générateur de bruit.

4. Procédé selon la revendication 1, l'adaptation du modèle statistique de classification étant effectuée lors de la mise en service de l'objet (2) à examiner, à intervalles de maintenance réguliers ou en cas de modification d'un environnement acoustique de l'objet (2) à examiner.

5. Procédé selon la revendication 1, le modèle statistique de classification de base de caractéristiques acoustiques étant généré sur la base d'une pluralité d'enregistrements de sons acoustiques qui sont effectués au niveau de l'objet de référence dans des conditions différentes ou à des instants différents.

6. Procédé selon la revendication 5, le modèle statistique de classification de base généré étant stocké dans une mémoire (7).

7. Procédé selon la revendication 6, le modèle de classification de base stocké étant adapté automatiquement sur la base d'un nombre d'enregistrements de sons acoustiques qui sont effectués au niveau de l'objet (2) à examiner qui génère du bruit et étant stocké temporairement en tant que modèle statistique de classification adapté.

8. Procédé selon la revendication 5 ou 7, les enregistrements de sons acoustiques étant effectués au moyen de capteurs de sons acoustiques (3) qui détectent le bruit aérien ou le bruit de structure.

9. Procédé selon la revendication 1, le modèle statistique de classification étant adapté pour l'ensemble de l'objet (2) qui génère du bruit ou pour des modules dudit objet générateur de bruit.

10. Procédé selon la revendication 8, les capteurs de sons acoustiques étant montés sur l'objet (2) à examiner qui génère du bruit ou étant passés à côté de l'objet à examiner qui génère du bruit.

11. Procédé selon la revendication 10, respectivement un modèle statistique de classification adapté étant calculé pour différentes positions réglables du capteur de sons acoustiques passé à côté de l'objet (2) à examiner.

12. Procédé selon la revendication 11, les positions réglables du capteur de sons acoustiques (3) passé à côté correspondant à l'agencement dans l'espace de différents modules de l'objet (2) à examiner qui génère du bruit.

13. Dispositif pour reconnaître un état d'un objet à examiner qui génère du bruit, comprenant une unité de traitement de données qui est réalisée de manière à adapter automatiquement, sur la base de caractéristiques acoustiques (m) d'un bruit généré par l'objet (2) à examiner, un modèle statistique de classification de base de caractéristiques acoustiques généré pour au moins un objet de référence, l'unité de traitement de données (5) étant réalisée pour classer l'état de l'objet (2) à examiner qui génère du bruit sur la base du modèle statistique de classification adapté, le dispositif étant **caractérisé en ce que** l'unité de traitement de données est réalisée pour adapter individuellement le modèle statistique de classification de base et **en ce que** l'unité de traitement de données est réalisée pour classer, sur la base du modèle statistique de classification adapté individuellement, l'état de l'objet (2) à examiner qui génère du bruit.

14. Dispositif selon la revendication 13, avec au moins un capteur de sons acoustiques (3) pour détecter un bruit aérien ou de structure généré par l'objet (2) à examiner qui génère du bruit.

15. Programme informatique avec des commandes de programme pour exécuter le procédé selon la revendication 1 à 12.

16. Support de données pour stocker le programme informatique selon la revendication 15.
